# EUROPEAN PATENT APPLICATION

(11) **EP 3 747 845 A1**
(43) Date of publication of application: **09.12.2020**
(21) Application number: 19747824.1
(22) Date of filing: 30.01.2019
(51) Int. Cl.: C03C 27/12, B32B 17/10, B32B 27/16, B32B 27/30, C08L 33/04

(54) **INTERMEDIATE FILM FOR LAMINATED GLASS AND LAMINATED GLASS**

(30) Priority: 02.02.2018 JP 2018017724
(71) Applicant: SEKISUI CHEMICAL CO., LTD., Osaka-shi Osaka 530-8565 (JP)
(72) Inventor: ISHIKAWA, Yuki, Mishima-gun, Osaka 618-0021 (JP); KAWADA, Shinji, Mishima-gun, Osaka 618-0021 (JP); IWAMOTO, Tatsuya, Kouka-shi, Shiga 528-8585 (JP)
(74) Representative: Ter Meer Steinmeister & Partner
(86) International application number: PCT/JP2019/003181
(87) International publication number: WO 2019/151328

(57) **Abstract**

Provided is an interlayer film for laminated glass capable of enhancing the sound insulating property over a wide range of temperature from 10°C to 30°C. An interlayer film for laminated glass according to the present invention is an interlayer film for laminated glass having a one-layer structure or a two or more-layer structure, the interlayer film includes a layer containing a cured product, the cured product is a cured product of a photocurable compound or a moisture-curable compound, and in viscoelasticity measurement at a frequency of 1 Hz and in a shearing mode for the layer containing a cured product, a peak temperature of tanδ is -50°C or more and 30°C or less, and tanδ at the peak temperature of tanδ is 2.0 or more.

## Description

### TECHNICAL FIELD

The present invention relates to an interlayer film for laminated glass which is used for obtaining laminated glass. Moreover, the present invention relates to a laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between two glass plates.

As one example of the interlayer film for laminated glass, the following Patent Document 1 discloses an interlayer film having a sound insulating layer formed of composition (A) containing at least one resin (a1) selected from a thermoplastic resin and a thermosetting resin. Tanδ that is obtained when the dynamic viscoelasticity of the sheet formed of the aforementioned composition to have a thickness of 0.8 mm is measured at a frequency of 0.3 Hz in a tensile mode has the maximum value at temperature T_{A} (°C). In the measurement of the dynamic viscoelasticity, T_{A} (°C) ranges from -50 to 50°C, and tanδ at T_{A} (°C) is 2.5 or more.

Patent Document 1 indicates polyvinyl acetal, polyvinyl alcohol, polyurethane, polyvinyl carboxylate, olefin-vinyl carbonate copolymer, polyurethane elastomer, polyester elastomer, styrene-diene block copolymer, and chlorinated polyolefin, as the thermoplastic resin. Patent Document 1 indicates epoxy resins, phenol resins, urethane resins, melamine resins, and unsaturated polyester resins as the thermosetting resin.

Also, Patent Document 1 indicates that the sound insulating property of the interlayer film is enhanced. In Examples of Patent Document 1, as measurement results of sound transmission loss at temperatures of 0°C, 5°C, 10°C, 15°C, 20°C, 25°C, 30°C, 35°C and 40°C, the temperature at which the mean value of the sound transmission loss is the largest, and the sound transmission loss at the temperature at which the mean value of the sound transmission loss is the largest (mean value at a plurality of frequencies) are indicated.

Also, the following Patent Document 2 discloses a photocurable resin composition for an interlayer film for laminated glass. The photocurable resin composition contains a (meth)acrylic polymer, a methacrylic monomer, and a photopolymerization initiator. Patent Document 2 indicates that a laminated glass that is difficult to be broken when an impact is applied from outside can be obtained.

### Related Art Documents

### Patent Documents

Patent Document 1: WO2017/170259A1
Patent Document 2: WO2017/209013A1

### SUMMARY OF THE INVENTION

### PROBLEMS TO BE SOLVED BY THE INVENTION

A laminated glass including an interlayer film is used in various temperature environments. In a laminated glass prepared with a conventional interlayer film, it is sometimes the case that the sound insulating property cannot be enhanced over a wide range of temperature. A laminated glass having high sound insulating property at a specific one temperature can have low sound insulating property when the laminated glass is used at a temperature different from the specific one temperature.

Also, Patent Document 1 indicates that the sound insulating property of the interlayer film is enhanced. While Patent Document 1 evaluates the sound transmission loss at temperatures of 0°C, 5°C, 10°C, 15°C, 20°C, 25°C, 30°C, 35°C and 40°C, it lacks description of results of sound transmission loss at every temperature of the plurality of temperatures. Patent Document 1 fails to indicate enhancement of the sound insulating property over a wide range of temperature by Examples.

While Patent Document 2 indicates that a laminated glass that is difficult to be broken when an impact is applied from outside can be obtained, it lacks the description about the sound insulating property in the photocurable resin composition.

The present invention is aimed at providing an interlayer film for laminated glass capable of enhancing the sound insulating property over a wide range of temperature from 10°C to 30°C. Moreover, the present invention is also aimed at providing laminated glass prepared with the interlayer film for laminated glass.

### MEANS FOR SOLVING THE PROBLEMS

According to a broad aspect of the present invention, there is provided an interlayer film for laminated glass (hereinafter, also referred to as an interlayer film) having a one-layer structure or a two or more-layer structure, the interlayer film including a layer containing a cured product, the cured product being a cured product of a photocurable compound or a moisture-curable compound, or a cured product of a curable compound having a (meth)acryloyl group, the layer containing a cured product having a peak temperature of tanδ of -50°C or more and 30°C or less and having tanδ at the peak temperature of tanδ of 2.0 or more in viscoelasticity measurement at a frequency of 1 Hz and in a shearing mode.

In a specific aspect of the interlayer film according to the present invention, the cured product is a cured product of a photocurable compound.

In a specific aspect of the interlayer film according to the present invention, the layer containing a cured product has a storage modulus G' at 100°C of 5.0 × 10³ Pa or more.

In a specific aspect of the interlayer film according to the present invention, a peak temperature of tanδ is -30°C or more and 20°C or less in viscoelasticity measurement at a frequency of 1 Hz and in a shearing mode for the layer containing a cured product.

In a specific aspect of the interlayer film according to the present invention, the interlayer film is an interlayer film for laminated glass having a two or more-layer structure, and the interlayer film includes a layer containing a resin that is different from the cured product.

In a specific aspect of the interlayer film according to the present invention, the interlayer film for laminated glass has a two or more-layer structure, the interlayer film includes a layer containing a resin that is different from the cured product, and in viscoelasticity measurement at a frequency of 1 Hz and in a shearing mode for the interlayer film, a peak temperature of tanδ of the layer containing a resin that is different from the cured product is -100°C or more and 100°C or less, and a ratio of tanδ at a peak temperature of tanδ of the layer containing a cured product, to tanδ at a peak temperature of tanδ of the layer containing a resin that is different from the cured product in viscoelasticity measurement at a frequency of 1 Hz and in a shearing mode for the interlayer film is 2.0 or more and 10.0 or less.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

### EFFECT OF THE INVENTION

The interlayer film for laminated glass according to the present invention has a one-layer structure or a two or more-layer structure. The interlayer film for laminated glass according to the present invention includes a layer containing a cured product. In the interlayer film for laminated glass according to the present invention, the cured product is a cured product of a photocurable compound or a moisture-curable compound, or a cured product of a curable compound having a (meth)acryloyl group. In the interlayer film for laminated glass according to the present invention, a peak temperature of tanδ is -50°C or more and 30°C or less, and tanδ at the peak temperature of tanδ is 2.0 or more in viscoelasticity measurement at a frequency of 1 Hz and in a shearing mode for the cured product. In the interlayer film for laminated glass according to the present invention, since the aforementioned configuration is provided, it is possible to enhance the sound insulating property over a wide range of temperature from 10°C to 30°C.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an example of laminated glass prepared with the interlayer film for laminated glass shown in Fig. 1.
[Fig. 4] Fig. 4 is a sectional view schematically showing an example of laminated glass prepared with the interlayer film for laminated glass shown in Fig. 2.

### MODES FOR CARRYING OUT THE INVENTION

Hereinafter, the present invention will be described in detail.

### (Interlayer film for laminated glass)

The interlayer film for laminated glass according to the present invention (hereinafter, sometimes described as interlayer film) has a one-layer structure or a two or more-layer structure.

The interlayer film according to the present invention includes a layer containing a cured product. In the interlayer film according to the present invention, the cured product is a cured product of a photocurable compound or a moisture-curable compound, or a cured product of a curable compound having a (meth)acryloyl group.

In the interlayer film according to the present invention, the curable compound may be a photocurable compound or a moisture-curable compound, or may be a curable compound having a (meth)acryloyl group. The curable compound having a (meth)acryloyl group may be a photocurable compound or may be a moisture-curable compound, or may be a curable compound that is different from both the photocurable compound and the moisture-curable compound. In general, since a curable compound having a (meth)acryloyl group has a (meth)acryloyl group, the compound cures by irradiation with light.

The cured product contained in the layer containing a cured product is generally a resin. Therefore, the layer containing a cured product is also referred to as a first resin layer.

In the interlayer film according to the present invention, a peak temperature of tanδ is -50°C or more and 30°C or less, and tanδ (1) at the peak temperature of tanδ is 2.0 or more in viscoelasticity measurement at a frequency of 1 Hz and in a shearing mode for the layer containing a cured product.

In the interlayer film according to the present invention, since the aforementioned configuration is provided, it is possible to enhance the sound insulating property over a wide range of temperature including 10°C to 30°C. For example, it is possible to enhance the sound insulating property not at only one of temperatures selected, for example, from 10°C, 20°C, and 30°C, but at all these three temperatures. Therefore, in the interlayer film according to the present invention, it is possible to exert high sound insulating property even when a laminated glass prepared with the interlayer film is used in various temperature environments.

In the interlayer film according to the present invention, since migration of the plasticizer and other additive is small, and the compatibility is excellent even if these ingredients migrate, the transparency is difficult to deteriorate by storage, and the haze is difficult to change even if the interlayer film is stored.

From the viewpoint of further enhancing the sound insulating property over a wide range of temperature, the peak temperature of tanδ of the layer containing a cured product is preferably -45°C or more, more preferably -40°C or more, still more preferably -35°C or more, further preferably -30°C or more, still further preferably -25°C or more, especially preferably -20°C or more, and most preferably - 10°C or more.

From the viewpoint of further enhancing the sound insulating property over a wide range of temperature, the peak temperature of tanδ of the layer containing a cured product is preferably 25°C or less, more preferably 20°C or less, further preferably 15°C or less, and especially preferably 10°C or less.

From the viewpoint of further enhancing the sound insulating property over a wide range of temperature, tanδ (1) at the peak temperature of tanδ of the layer containing a cured product is preferably 2.2 or more, more preferably 2.4 or more, still more preferably 2.5 or more, especially preferably 2.6 or more, further preferably 2.8 or more, and still further preferably 3.0 or more. The upper limit of tanδ (1) at the peak temperature of tanδ is not limited. The tanδ (1) at the peak temperature of tanδ may be 6 or less. When the tanδ (1) is the above lower limit or more, the sound insulating property in the low frequency region of 250 Hz to 1000 Hz or less is further enhanced, and the engine noise in an automobile or the like in which the interlayer film is used is reduced.

The storage modulus G' at 100°C of the layer containing a cured product is preferably 5.0 × 10³ Pa or more, more preferably 1.0 × 10⁴ Pa or more, still more preferably 2.0 × 10⁴ Pa or more, further preferably 3.0 × 10⁴ Pa or more, still further preferably 4.0 × 10⁴ Pa or more, and especially preferably 5.0 × 10⁴ Pa or more When the storage modulus G' at 100°C of the layer containing a cured product is the above lower limit or more, the sound insulating property is further enhanced over a wide range of temperature. Also, when the storage modulus G' at 100°C of the layer containing a cured product is the above lower limit or more, the sound insulating property in the high frequency region of 5000 Hz to 10000 Hz is further enhanced, and the road noise in an automobile or the like in which the interlayer film is used is reduced.

From the viewpoint of enhancing the uniformity of curing of the layer containing a cured product and further enhancing the sound insulating property over a wide range of temperature, the curable compound is preferably a photocurable compound, and preferably a curable compound having a (meth)acryloyl group. From the viewpoint of enhancing the uniformity of curing of the layer containing a cured product and further enhancing the sound insulating property over a wide range of temperature, the cured product is preferably a (meth)acrylic polymer.

From the viewpoint of further enhancing the sound insulating property over a wide range of temperature, it is preferred that the interlayer film include a layer containing a resin that is different from the cured product. It is preferred that the resin contained in the layer containing a resin be a cured product of a thermosetting compound or a thermoplastic resin. When the resin is a cured product of a curable compound, it is preferred that the curable compound be a thermosetting compound.

The layer containing a resin that is different from the cured product is also referred to as a second resin layer.

From the viewpoint of further enhancing the sound insulating property over a wide range of temperature, the peak temperature of tanδ in viscoelasticity measurement at a frequency of 1 Hz and in a shearing mode for the layer containing a resin (second resin layer) is preferably -100°C or more, and is preferably 100°C or less.

From the viewpoint of further enhancing the sound insulating property over a wide range of temperature, the peak temperature of tanδ of the layer containing a resin (second resin layer) is preferably -90°C or more, and more preferably -80°C or more, and is preferably 90°C or less, and more preferably 80°C or less.

Viscoelasticity measurement is conducted for an interlayer film having a two or more-layer structure including a layer containing a resin that is different from a cured product. A ratio of tanδ (1) at the peak temperature of tanδ of the layer containing a cured product (first resin layer) to tanδ (2) at the peak temperature of tanδ of the layer containing a resin that is different from the cured product (second resin layer) in viscoelasticity measurement at a frequency of 1 Hz in a shearing mode for the interlayer film is referred to as a ratio (tanδ (1)/tanδ (2)).

From the viewpoint of further enhancing the sound insulating property over a wide range of temperature, the ratio (tanδ (1)/tanδ (2)) is preferably 2.0 or more, and is preferably, 10.0 or less.

The ratio (tanδ (1)/tanδ (2)) is preferably 2.2 or more, more preferably 2.3 or more, still more preferably 2.4 or more, further preferably 2.5 or more, still further preferably 2.6 or more, yet still further preferably 2.7 or more, especially preferably 2.8 or more, especially more preferably 2.9 or more, and most preferably 3.0 or more. The ratio (tanδ (1)/tanδ (2)) is preferably 9.0 or less, more preferably 8.0 or less, still more preferably 7.0 or less, further preferably 6.0 or less, and most preferably 5.0 or less. When the ratio (tanδ (1)/tanδ (2)) is the above lower limit or more and the above upper limit or less, it is possible to further enhance the sound insulating property over a wide range of temperature.

The viscoelasticity measurement is specifically conducted in the following manner.

A test piece is stored in an environment at a room temperature of 23 ± 2°C, and a humidity of 25 ± 5% for 12 hours, and then the viscoelasticity is measured by using a dynamic viscoelasticity measuring device. The measurement is conducted in the condition of raising the temperature from - 50°C to 200°C at a temperature rising speed of 3°C/ min. in a shearing mode, and in the condition of a frequency of 1 Hz and a strain of 1%.

Examples of the dynamic viscoelasticity measuring device include a viscoelasticity analyzer "DVA-200" available from IT Keisoku Seigyo Co., Ltd., and the like.

The viscoelasticity measurement may be conducted using an interlayer film itself. In this case, a peak of tanδ derived from the layer containing a cured product, or a peak of tanδ derived from the layer containing a resin may be read. When the interlayer film is a multilayer interlayer film having a two or more-layer structure, the layers may be delaminated to conduct the viscoelasticity measurement. In the case of a laminated glass, after cooling the laminated glass with liquid nitrogen or the like, the lamination glass member and the interlayer film are delaminated, and the viscoelasticity measurement may be conducted using the delaminated interlayer film.

For example, when the thickness of the layer containing a cured product is 0.3 mm or more and 2 mm or less, it is possible to easily measure the viscoelasticity by directly using the layer containing a cured product as a test piece. When the thickness of the layer containing a cured product is less than 0.3 mm, the viscoelasticity may be measured using a test piece having a thickness of 0.3 mm or more and 2 mm or less by stacking a plurality of the layers containing a cured product, or separately preparing a layer containing a cured product in which only the thickness is adjusted. When the thickness of the layer containing a cured product is more than 2 mm, the viscoelasticity may be measured using a test piece having a thickness of 0.3 mm or more and 2 mm or less by slicing or pressing the layer containing a cured product, or separately preparing a layer containing a cured product in which only the thickness is adjusted.

The viscoelasticity measurement for the layer containing a resin can be conducted in the same manner as the viscoelasticity measurement for the layer containing a cured product while the test piece is changed.

The storage modulus G' at 100°C of the layer containing a cured product can be measured in the viscoelasticity measurement for the layer containing a cured product.

The interlayer film according to the present invention may have a one-layer structure and may have a two or more-layer structure. The interlayer film according to the present invention may have a two-layer structure and may have a three or more-layer structure.

The interlayer film according to the present invention may have a one-layer structure of only a first layer. In this case, the first layer is the layer containing a cured product.

From the viewpoint of effectively enhancing the sound insulating property and adhesivity between layers, the interlayer film according to the present invention may include a first layer, and a second layer arranged on a first surface side of the first layer. In this case, it is preferred that the first layer be the layer containing a cured product.

From the viewpoint of effectively enhancing the sound insulating property and adhesivity between layers, the interlayer film according to the present invention may include a first layer, and a second layer arranged on a first surface side of the first layer, and may further include a third layer arranged on a second surface side opposite to the first surface side of the first layer. In this case, it is preferred that the first layer be the layer containing a cured product.

From the viewpoint of effectively enhancing the sound insulating property and adhesivity between the interlayer film and glass, it is preferred that the layer containing a cured product be not a surface layer in the interlayer film, and it is preferred that the layer containing a cured product be an intermediate layer in the interlayer film. It is to be noted that the layer containing a cured product may be a surface layer in the interlayer film.

From the viewpoint of enhancing the transparency of the laminated glass, the visible light transmittance of the interlayer film is preferably 70% or more, more preferably 80% or more, further preferably 85% or more.

The visible light transmittance is measured at a wavelength ranging from 380 to 780 nm by using a spectrophotometer ("U-4100" available from Hitachi High-Tech Corporation) in conformity with JIS R3211:1998.

The visible light transmittance of the interlayer film may be measured while the interlayer film is arranged between two sheets of clear glass. It is preferred that the clear glass have a thickness of 2.0 mm.

Hereinafter, specific embodiments of the present invention will be described with reference to the drawings.

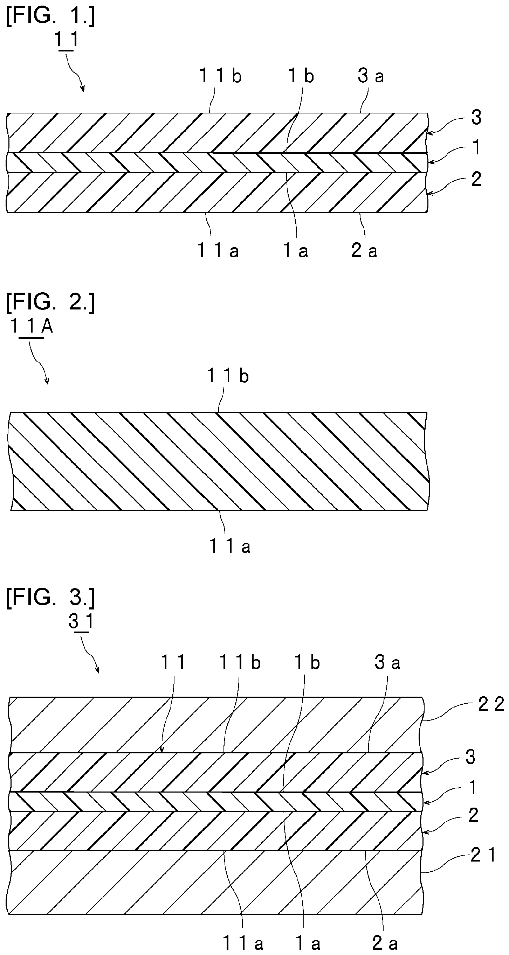

Fig. 1 is a sectional view schematically showing an interlayer film for laminated glass in accordance with a first embodiment of the present invention.

An interlayer film 11 shown in Fig. 1 is a multilayered interlayer film having a two or more-layer structure. Specifically, the interlayer film 11 has a three-layer structure. The interlayer film 11 is used for obtaining laminated glass. The interlayer film 11 is an interlayer film for laminated glass. The interlayer film 11 is provided with a first layer 1, a second layer 2 and a third layer 3. The second layer 2 is arranged on a first surface 1a side of the first layer 1 to be layered thereon. The third layer 3 is arranged on a second surface 1b side opposite to the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (second layer 2/first layer 1/third layer 3) in which the second layer 2, the first layer 1, and the third layer 3 are layered in this order.

In the interlayer film 11, it is preferred that the first layer 1 be the layer containing a cured product. The second layer 2 may be the layer containing a cured product, or the third layer 3 may be the layer containing a cured product.

In this connection, other layers may be arranged between the second layer 2 and the first layer 1 and between the first layer 1 and the third layer 3, respectively. It is preferred that the second layer 2 and the first layer 1, and the first layer 1 and the third layer 3 be directly layered. As the other layer, an adhesive layer can be recited.

Fig. 2 is a sectional view schematically showing an interlayer film for laminated glass in accordance with a second embodiment of the present invention.

An interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass.

In the interlayer film 11A, the interlayer film 11A per se is the layer containing a cured product.

Hereinafter, the details of the interlayer film according to the present invention, the layer containing a cured product, the layer containing a resin, the first layer, the second layer and the third layer, and the details of each ingredient used in the interlayer film will be described.

### (Curable compound for forming cured product in layer containing cured product (first resin layer), and cured product)

The interlayer film includes the layer containing a cured product. The curable compound for forming the cured product in the layer containing a cured product is a photocurable compound or a moisture-curable compound.

The curable compound is preferably a curable compound having a (meth)acryloyl group, and is more preferably a (meth)acrylic polymer.

It is preferred that the (meth)acrylic polymer be a polymer of a polymerizable composition containing a curable compound having a (meth)acryloyl group. The polymerizable composition contains a polymerizable component. In order to effectively form the cured product in the layer containing the cured product, the polymerizable composition may contain a photoreaction initiator. The polymerizable composition may contain an auxiliary for accelerating the curing reaction together with the photoreaction initiator. Representatives of the curable compound having a (meth)acryloyl group include (meth)acrylic ester. It is preferred that the (meth)acrylic polymer be a poly(meth)acrylic ester.

For effectively obtaining the effect of the present invention, it is preferred that the polymerizable component include a (meth)acrylic ester having an alicyclic structure, a (meth)acrylic ester having a cyclic ether structure, a (meth)acrylic ester having an aromatic ring, a (meth)acrylic ester having a polar group, or an acyclic (meth)acrylic ester having 6 or less carbon atoms in the side chain. By using such a preferred (meth)acrylic ester, it is possible to enhance both the sound insulating property and the ability to prevent foaming in good balance.

Examples of the (meth)acrylic ester having an alicyclic structure include isobornyl (meth)acrylate, cyclohexyl (meth)acrylate, dicyclopentanyl acrylate, and the like.

Examples of the (meth)acrylic ester having a cyclic ether structure include glycidyl (meth)acrylate, 2-hydroxyethyl (meth)acrylate glycidyl ether, 3-hydroxypropyl (meth)acrylate glycidyl ether, 4-hydroxybutyl acrylate glycidyl ether, 5-hydroxypentyl (meth)acrylate glycidyl, 6-hydroxyhexyl (meth)acrylate glycidyl ether; (3-methyloxetan-3-yl)methyl (meth)acrylate, (3-propyloxetan-3-yl)methyl (meth)acrylate, (3-ethyloxetan-3-yl)methyl (meth)acrylate, (3-butyloxetan-3-yl)methyl (meth)acrylate, (3-ethyloxetan-3-yl)ethyl (meth)acrylate, (3-ethyloxetan-3-yl)propyl (meth)acrylate, (3-ethyloxetan-3-yl)butyl (meth)acrylate, (3-ethyloxetan-3-yl)pentyl (meth)acrylate, (3-ethyloxetan-3-yl)hexyl (meth)acrylate; tetrahydrofurfuryl (meth)acrylate, (2,2-dimethyl-1,3-dioxolan-4-yl)methyl (meth)acrylate, (2-methyl-2-ethyl-1,3-dioxolan-4-yl)methyl (meth)acrylate, (2-methyl-2-isobutyl-1,3-dioxolan-4-yl)methyl (meth)acrylate, (2-cyclohexyl-1,3-dioxolan-4-yl)methyl (meth)acrylate, tetrahydrofurfuryl alcohol acrylic acid multimer ester; tetrahydro-2H-pyran-2-yl-(meth)acrylate, 2-{1-[(tetrahydro-2H-pyran-2-yl)oxy]-2-methylpropyl}(meth)acrylate, cyclic trimethylol propane formal acrylate, (meth)acryloyl morpholine, and the like. From the viewpoint of effectively obtaining the effect of the present invention, tetrahydrofurfuryl (meth)acrylate, or cyclic trimethylol propane formal acrylate is especially preferred.

Examples of the (meth)acrylic ester having an aromatic ring include benzyl acrylate, phenoxypolyethyleneglycol acrylate, and the like.

Examples of the (meth)acrylic ester having a polar group include (meth)acrylic esters having a hydroxyl group, an amide group, an amino group, an isocyanate group, a carboxyl group or the like as the polar group.

Examples of the (meth)acrylic ester having a hydroxyl group include 2-hydroxyethyl (meth)acrylate, hydroxypropyl (meth)acrylate, 4-hydroxybutyl (meth)acrylate, 2-hydroxybutyl (meth)acrylate, and the like.

Examples of the (meth)acrylic ester having an amide group include N,N-dimethylaminopropyl (meth)acrylamide, N,N-dimethyl (meth)acrylamide, (meth)acryloyl morpholine, N-isopropyl (meth)acrylamide, N-hydroxyethyl (meth)acrylamide, and the like.

Examples of the (meth)acrylic ester having an amide group or an amino group include N-dialkylaminoalkyl (meth)acrylamide, N,N-dialkylaminoalkyl (meth)acrylamide, and the like.

Examples of the (meth)acrylic ester having an isocyanate group include triallylisocyanurate, derivatives thereof, and the like.

Examples of the (meth)acrylic ester having a carboxyl group include acrylic acid, ω-carboxy-polycaprolactone monoacrylate, 2-acryloyloxyethylsuccinic acid, and the like.

The above-described (meth)acrylic ester may be a polycarboxylic ester having a (meth)acryloyl group. Examples of the polycarboxylic ester having a (meth)acryloyl group include 2-acryloyloxyethyl succinate, and the like.

From the viewpoint of effectively obtaining the effect of the present invention, a (meth)acrylic ester having a hydroxyl group is preferred, and 2-hydroxyethyl (meth)acrylate, hydroxypropyl (meth)acrylate, or 4-hydroxybutyl (meth)acrylate is especially preferred.

Examples of the acyclic (meth)acrylic ester having 6 or less carbon atoms in the side chain include methyl (meth)acrylate, ethyl (meth)acrylate, propyl (meth)acrylate, butyl (meth)acrylate, and the like.

For effectively obtaining the effect of the present invention, it is preferred that the content of the acyclic (meth)acrylic ester having 8 or more carbon atoms in the side chain in 100% by weight of the polymerizable component be less than 20% by weight.

Examples of the (meth)acrylic ester include besides the compounds as recited above, diethyleneglycol monoethylether (meth)acrylate, 3-methoxybutyl (meth)acrylate, 2-acryloyloxyethyl-2-hydroxypropylphthalate, 2-acryloyloxyethyl-2-hydroxylpropylphthalate, ethylene glycol di(meth)acrylate, diethylene glycol di(meth)acrylate, tetraethylene glycol di(meth)acrylate, 1,6-hexane diol di(meth)acrylate, 1,9-nonane diol di(meth)acrylate, polytetramethylene glycol di(meth)acrylate, neopentyl glycol di(meth)acrylate, 1,3-butylene glycol di(meth)acrylate, 2,2-bis[4-(acryloxyethoxy)phenyl]propane di(meth)acrylate; trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(2-acryloyloxyethyl)phosphate, tetramethylol methane tri(meth)acrylate, tetramethylol propane tetra(meth)acrylate, derivatives thereof, and the like.

One kind of the (meth)acrylic ester may be used alone, and two or more kinds thereof may be used in combination. The above-described (meth)acrylic polymer may be a homopolymer of the above-described (meth)acrylic ester, or may be a copolymer of a polymerizable component containing the above-described (meth)acrylic ester.

Concrete examples of the photoreaction initiator include 2-methyl-1-(4-methylthiophenyl)-2-morpholinopropan-1-one, 2-benzyl-2-dimethylamino-1-(4-morpholinophenyl)-butanone-1,2-(dimethylamino)-2-[(4-methylphenyl)methyl]-1-[4-(4-morpholinyl)phenyl]-1-butanone, 2,4,6-trimethylbenzoyl-diphenyl-phosphine oxide, bis(2,4,6-trimethylbenzoyl)-phenylphosphine oxide, bis(η5-2,4-cyclopentadien-1-yl)-bis(2,6-difluoro-3-(1H-pyrrol-1-yl)-phenyl)titanium, 2-methyl-1-(4-methylthiophenyl)-2-morpholinopropan-1-one, 2-benzyl-2-dimethylamino-1-(4-morpholinophenyl)-butanone-1,2-(dimethylamino)-2-[(4-methylphenyl)methyl]-1-[4-(4-morpholinyl)phenyl]-1-butanone, diethoxyacetophenone, 2-hydroxy-2-methyl-1-phenylpropan-1-one, benzyldimethylketal, 4-(2-hydroxyethoxy)phenyl-(2-hydroxy-2-propyl)ketone, 1-hydroxycyclohexylphenylketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, benzoin, benzoin methyl ether, benzoin ethyl ether, benzoin isopropyl ether, benzoin isobutyl ether, benzophenone, methyl o-benzoylbenzoate, 4-phenylbenzophenone, 4-benzoyl-4'-methyl-diphenylsulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzene methanaminium bromide, (4-benzoylbenzyl)trimethylammonium chloride, 2-isopropylthioxanthone, 4-isopropylthioxanthone, 2,4-diethylthioxanthone, 2,4-dichlorothioxanthone, 1-chloro-4-propoxythioxanthone, 2-(3-dimethylamino-2-hydroxy)-3,4-dimethyl-9H-thioxanthon-9-one methochloride, 2,4,6-trimethylbenzoyl-diphenylphosphine oxide, bis(2,6-dimethoxybenzoyl)-2,4,4-trimethyl-pentylphosphine oxide, bis(2,4,6-trimethylbenzoyl)-phenylphosphine oxide, triphenylmethylium tetrakis(pentafluorophenyl) borate, and the like. Only one kind of the photoreaction initiator may be used, and two or more kinds thereof may be used in combination.

Examples of the auxiliary include triethanol amine, triisopropanol amine, 4,4'-dimethylaminobenzophenone (Michler's ketone), 4,4'-diethylaminobenzophenone, 2-dimethylaminoethyl benzoate, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethylthioxanthone, 2,4-diisopropylthioxanthone, and the like. One kind of the auxiliary may be used alone and two or more kinds thereof may be used in combination.

It is preferred that the auxiliary be benzyldimethylketal, 1-hydroxycyclohexylphenyl ketone, benzoylisopropyl ether, 4-(2-hydroxyethoxy)-phenyl(2-hydroxy-2-propyl) ketone, 2-hydroxy-2-methyl-1-phenylpropan-1-one, or triphenylmethylium tetrakis(pentafluorophenyl) borate.

In 100% by weight of the polymerizable composition, the content of the photoreaction initiator is preferably 0.01% by weight or more, more preferably 0.1% by weight or more and is preferably 10% by weight or less, more preferably 5% by weight or less. When the content of the photoreaction initiator is in the range from the above-described lower limit to the above-described upper limit, the photocurability and the storage stability further increase.

In 100% by weight of the composition for forming the layer containing a cured product, the content of the cured product is preferably 50% by weight or more, more preferably 60% by weight or more, further preferably 70% by weight or more, and especially preferably 80% by weight or more. When the content of the cured product is the above lower limit or more, it is possible to further exert the effect of the present invention. The content of the cured product in 100% by weight of the composition for forming the layer containing a cured product may be 100% by weight (total quantity).

When the curable compound for forming the cured product in the layer containing a cured product is a photocurable compound such as a photocurable compound having a (meth)acryloyl group, it is preferred that a photocuring device such as an ultraviolet irradiation device be used to cure the photocurable compound. Examples of the ultraviolet irradiation device include a box-type ultraviolet irradiation device, a belt-conveyer-type ultraviolet irradiation device, and the like. Examples of the ultraviolet lamp installed in the ultraviolet irradiation device include a superhigh-pressure mercury lamp, a high-pressure mercury lamp, a low-pressure mercury lamp, a chemical lamp, a metal halide lamp, an excimer lamp, a UV-LED, and the like. The ultraviolet lamp is preferably a chemical lamp or a UV-LED.

When the photocurable compound is irradiated with ultraviolet rays so as to obtain the cured product, the ultraviolet dose (cumulative dose) is preferably 500 mJ or more, more preferably 1000 mJ or more, further preferably 1500 mJ or more, and especially preferably 2000 mJ or more. The ultraviolet dose (cumulative dose) is preferably 20000 mJ or less, more preferably 10000 mJ or less, and further preferably 8000 mJ or less. When the ultraviolet dose (cumulative dose) is the above lower limit or more, it is possible to reduce the unreacted monomers. When the ultraviolet dose (cumulative dose) is the above upper limit or less, the storage stability of the resin increases. The irradiation intensity of the ultraviolet irradiation is preferably 0.1 mW or more, more preferably 0.5 mW or more, further preferably 1 mW or more, and especially preferably 2 mW or more.

### (Resin in layer containing resin that is different from cured product (second resin layer))

It is preferred that the interlayer film include a layer containing a resin that is different from the cured product. It is preferred that the layer containing a resin that is different from the cured product (second resin layer) is a layer containing a resin that is different from a cured product of a photocurable compound, a cured product of a moisture-curable compound, and a curable compound of a curable compound having a (meth)acryloyl group. The layer containing a resin that is different from the cured product is a resin layer that is different from the layer containing a cured product (first resin layer). The interlayer film may not include the second resin layer.

Examples of the resin contained in the second resin layer include cured products of thermosetting compounds, thermoplastic resins, and the like. The thermoplastic resin may be a thermoplastic elastomer.

The thermoplastic resin means a resin that softens and exhibits plasticity when it is heated, and hardens when it is cooled to room temperature. Among the thermoplastic resins, especially the thermoplastic elastomer means a resin that softens and exhibits plasticity when it is heated, and hardens to exhibits rubber elasticity when it is cooled to room temperature (25°C).

Examples of the thermoplastic resin include a polyvinyl acetal resin, a polyester resin, an aliphatic polyolefin, polystyrene, an ethylene-vinyl acetate copolymer resin, an ethylene-acrylic acid copolymer resin, a polyurethane resin, an ionomer resin, a polyvinyl alcohol resin, a polyvinyl acetate resin, and the like. Thermoplastic resins other than these may be used.

The thermoplastic resins exemplified above can be a thermoplastic elastomer by adjusting the molecular structure, the polymerization degree and the like of the resin.

It is preferred that the surface layer in the interlayer film contain a thermoplastic resin. It is preferred that each of the second layer and the third layer in the interlayer film having a second layer/first layer/third layer structure contain a thermoplastic resin.

From the viewpoint of further enhancing the rigidity of the laminated glass, it is preferred that the thermoplastic resin be a polyvinyl acetal resin, an ionomer resin or an ethylene-vinyl acetate copolymer resin. From the viewpoint of further enhancing the impact resistance and cracking preventability of the laminated glass, it is more preferred that the thermoplastic resin be a polyvinyl acetal resin.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

The average polymerization degree of the polyvinyl alcohol (PVA) is preferably 200 or more, more preferably 500 or more, still more preferably 1500 or more, further preferably 1600 or more, and is preferably 5000 or less, more preferably 4000 or less, further preferably 3500 or less, especially preferably 3000 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone, and two or more kinds thereof may be used in combination.

The content of the hydroxyl group (the amount of hydroxyl groups) of the polyvinyl acetal resin is preferably 15% by mole or more, more preferably 18% by mole or more, and preferably 40% by mole or less, and more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in conformity with JIS K6728 "Testing methods for polyvinyl butyral".

The acetylation degree of the polyvinyl acetal resin is preferably 0.01% by mole or more, more preferably 0.5% by mole or more, and preferably 10% by mole or less, and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (the butyralization degree in the case of a polyvinyl butyral resin) is preferably 55% by mole or more, more preferably 60% by mole or more and is preferably 75% by mole or less, and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

### (Tackifier resin)

It is preferred that the interlayer film contain a tackifier resin. It is preferred that the layer containing a cured product (first resin layer) contain a tackifier resin. It is preferred that the layer containing a resin (second resin layer) contain a tackifier resin. It is preferred that the first layer contain a tackifier resin. One kind of the tackifier resin may be used alone and two or more kinds thereof may be used in combination.

Examples of the tackifier resin include a styrene resin, a terpene resin, a rosin resin, and the like. From the viewpoint of enhancing the sound insulating property over a wide range of temperature while keeping haze satisfactorily, the tackifier resin is preferably a styrene resin. It is preferred that the styrene resin be an oligomer of styrene. One exemplary commercially available product of the oligomer of styrene is "YS resin SX100" available from YASUHARA CHEMICAL CO., LTD.

In the resin layer containing a tackifier resin, the content of the tackifier resin per 100 parts by weight of the resin excluding the tackifier resin contained in the resin layer is preferably 10 parts by weight or more, more preferably 20 parts by weight or more, further preferably 30 parts by weight or more, and is preferably 150 parts by weight or less, more preferably 100 parts by weight or less. When the content of the tackifier resin is the above lower limit or more, it is possible to enhance the sound insulating property over a wide range of temperature while keeping haze satisfactorily.

### (Plasticizer)

It is preferred that the interlayer film contain a plasticizer. From the viewpoint of effectively enhancing the sound insulating property, it is preferred that the layer containing a cured product (first resin layer) contain a plasticizer. It is preferred that the layer containing a resin (second resin layer) contain a plasticizer. It is preferred that the first layer contain a plasticizer. It is preferred that the second layer contain a plasticizer. It is preferred that the third layer contain a plasticizer. By using the plasticizer, adhesive force between layers tends to be further increased. One kind of the plasticizer may be used alone and two or more kinds thereof may be used in combination.

Examples of the plasticizer include paraffin oil, a benzoic ester plasticizer, an organic ester plasticizer, an organic phosphate plasticizer, and the like. Examples of the organic ester plasticizer include a monobasic organic acid ester, a polybasic organic acid ester, and the like. Examples of the phosphate plasticizer include an organic phosphate plasticizer, an organic phosphite plasticizer, and the like. It is preferred that the plasticizer be a liquid plasticizer.

Examples of the paraffin oil include naphthenic process oil, white mineral oil, mineral oil, paraffin wax, liquid paraffin, and the like.

Examples of commercially available paraffin oil include "Diana process oil PW-90" available from Idemitsu Kosan Co., Ltd., "Diana process oil PW-100" available from Idemitsu Kosan Co., Ltd., "Diana process oil PW-32" available from Idemitsu Kosan Co., Ltd., and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dibutyl maleate, bis(2-butoxyethyl) adipate, dibutyl adipate, diisobutyl adipate, 2,2-butoxyethoxyethyl adipate, benzoic acid glycol ester, adipic acid 1,3-butyleneglycol polyester, dihexyl adipate, dioctyl adipate, hexyl cyclohexyl adipate, a mixture of heptyl adipate and nonyl adipate, diisononyl adipate, diisodecyl adipate, heptyl nonyl adipate, tributyl citrate, tributyl acetylcitrate, diethyl carbonate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic ester plasticizer include a diester plasticizer represented by the following structural formula (1).

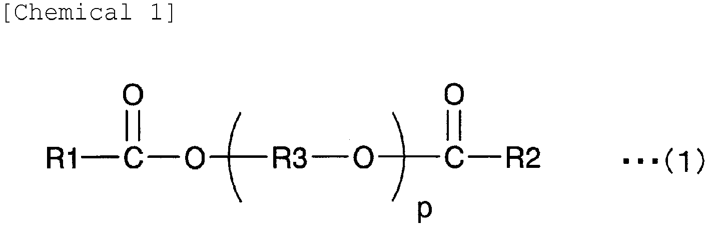

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate or triethylene glycol di-2-ethylbutyrate, and it is further preferred that the plasticizer include triethylene glycol di-2-ethylhexanoate.

In the layer containing a cured product (first resin layer), the content of the plasticizer per 100 parts by weight of the cured product is referred to as content (1). The content (1) is preferably 5 parts by weight or more, more preferably 10 parts by weight or more, further preferably 20 parts by weight or more, and especially preferably 25 parts by weight or more, and is preferably 60 parts by weight or less, and more preferably 50 parts by weight or less. When the content (1) is the above lower limit or more, it is possible to effectively enhance the sound insulating property. When the content (1) is the above upper limit or less, the penetration resistance of laminated glass is further enhanced.

In the layer containing a resin (second resin layer), the content of the plasticizer per 100 parts by weight of the resin is referred to as content (2). The content (2) is preferably 5 parts by weight or more, more preferably 10 parts by weight or more, further preferably 20 parts by weight or more, and is preferably 60 parts by weight or less, more preferably 55 parts by weight or less, further preferably 50 parts by weight or less. When the content (2) is the above lower limit or more, it is possible to effectively enhance the sound insulating property. When the content of the plasticizer is the above upper limit or less, the penetration resistance of laminated glass is further enhanced.

### (Heat shielding substance)

The interlayer film may contain a heat shielding substance. The layer containing a cured product may contain a heat shielding substance. The layer containing a resin may contain a heat shielding substance. The first layer may contain a heat shielding substance. The second layer may contain a heat shielding substance. The third layer may contain a heat shielding substance. One kind of the heat shielding substance may be used alone, and two or more kinds thereof may be used in combination.

The heat shielding substance may contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

The interlayer film may contain at least one kind of Ingredient X among a phthalocyanine compound, a naphthalocyanine compound and an anthracyanine compound. The layer containing a cured product may contain the Ingredient X. The layer containing a resin may contain the Ingredient X. The first layer may contain the Ingredient X. The second layer may contain the Ingredient X. The third layer may contain the Ingredient X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

The Ingredient X may contain a vanadium atom or a copper atom. The Ingredient X may contain a vanadium atom, and may contain a copper atom. The Ingredient X may be at least one kind of phthalocyanines containing a vanadium atom or a copper atom, and derivatives of phthalocyanine containing a vanadium atom or a copper atom.

The interlayer film may contain heat shielding particles. The layer containing a cured product may contain heat shielding particles. The layer containing a resin may contain heat shielding particles. The first layer may contain heat shielding particles. The second layer may contain heat shielding particles. The third layer may contain heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

As the heat shielding particles, metal oxide particles may be used. As the heat shielding particles, particles formed of an oxide of metal (metal oxide particles) may be used.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used.

### (Metal salt)

The interlayer film may contain at least one kind of metal salt (hereinafter, also referred to as Metal salt M) among an alkali metal salt, an alkaline earth metal salt, and a magnesium salt. The layer containing a cured product may contain the Metal salt M. The layer containing a resin may contain the Metal salt M. The first layer may contain the Metal salt M. The second layer may contain the metal salt M. The third layer may contain the Metal salt M. By the use of the Metal salt M, controlling the adhesivity between the interlayer film and a lamination glass member such as a glass plate or the adhesivity between respective layers in the interlayer film is facilitated. One kind of the Metal salt M may be used alone, and two or more kinds thereof may be used in combination.

The Metal salt M may contain at least one kind of metal selected from the group consisting of Li, Na, K, Rb, Cs, Mg, Ca, Sr and Ba.

As the Metal salt M, an alkali metal salt of an organic acid having 2 to 16 carbon atoms, an alkali earth metal salt of an organic acid having 2 to 16 carbon atoms, or a magnesium salt of an organic acid having 2 to 16 carbon atoms can be used.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

### (Ultraviolet ray screening agent)

The interlayer film may contain an ultraviolet ray screening agent. The layer containing a cured product may contain an ultraviolet ray screening agent. The layer containing a resin may contain an ultraviolet ray screening agent. The first layer may contain an ultraviolet ray screening agent. The second layer may contain an ultraviolet ray screening agent. The third layer may contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazin-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

### (Oxidation inhibitor)

The interlayer film may contain an oxidation inhibitor. The layer containing a cured product may contain an oxidation inhibitor. The layer containing a resin may contain an oxidation inhibitor. The first layer may contain an oxidation inhibitor. The second layer may contain an oxidation inhibitor. The third layer may contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy) (2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

### (Other ingredients)

Each of the interlayer film, the layer containing a cured product, the layer containing a resin, the first layer, the second layer, and the third layer may contain additives such as a coupling agent, a dispersing agent, a surfactant, a flame retardant, an antistatic agent, a pigment, a dye, an adhesive force regulator other than metal salt, a moisture-resistance agent, a fluorescent brightening agent, and an infrared ray absorber, as necessary. One kind of these additives may be used alone, and two or more kinds thereof may be used in combination.

### (Other details of interlayer film for laminated glass)

The thickness of the interlayer film is not particularly limited. From the viewpoint of the practical aspect and the viewpoint of sufficiently enhancing the penetration resistance and the flexural rigidity of laminated glass, the thickness of the interlayer film is preferably 0.1 mm or more, more preferably 0.25 mm or more, and is preferably 3 mm or less, more preferably 1.5 mm or less. When the thickness of the interlayer film is the above lower limit or more, the penetration resistance and the flexural rigidity of laminated glass are further enhanced. When the thickness of the interlayer film is the above upper limit or less, the transparency of the interlayer film is further improved.

The thickness of the interlayer film is designated as T. From the viewpoint of further enhancing the sound insulating property over a wide range of temperature, the thickness of the layer containing a cured product (thickness per one layer) is preferably 0.03T or more, more preferably 0.06T or more, and further preferably 0.1T or more, and is preferably 1T or less, more preferably 0.5T or less, and further preferably 0.2T or less.

From the viewpoint of further enhancing the sound insulating property over a wide range of temperature, the thickness of the layer containing a resin (thickness per one layer) is preferably 0.3T or more, more preferably 0.35T or more, and further preferably 0.4T or more, and is preferably 0.95T or less, and more preferably 0.9T or less.

From the viewpoint of further enhancing the sound insulating property over a wide range of temperature, the thickness of the layer containing a cured product (thickness per one layer) is preferably 15 µm or more, more preferably 40 µm or more, and further preferably 80 µm or more, and is preferably 600 µm or less, more preferably 300 µm or less, and further preferably 150 µm or less.

From the viewpoint of further enhancing the sound insulating property over a wide range of temperature, the thickness of the layer containing a resin (thickness per one layer) is preferably 200 µm or more, more preferably 400 µm or more, and further preferably 600 µm or more, and is preferably 1200 µm or less, more preferably 1000 µm or less, and further preferably 850 µm or less.

The interlayer film may be an interlayer film having a uniform thickness, or may be an interlayer film having varying thickness. The sectional shape of the interlayer film may be a rectangular shape and may be a wedge-like shape.

The production method of the interlayer film according to the present invention is not particularly limited. In the case of a single-layered interlayer film, examples of the production method of the interlayer film according to the present invention include a method of extruding a resin composition with an extruder. In the case of a multi-layered interlayer film, examples of the production method of the interlayer film according to the present invention include a method of separately forming resin compositions used for constituting respective layers into respective layers, and then, for example, layering the obtained layers, a method of coextruding resin compositions used for constituting respective layers with an extruder and layering the layers, and the like. A production method of extrusion-molding is preferred because the method is suitable for continuous production.

For the reason of excellent production efficiency of the interlayer film, it is preferred that the second layer and the third layer contain the same polyvinyl acetal resin, and it is more preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method, an emboss roll method, a calender roll method, a profile extrusion method, and the like. The emboss roll method is preferred because a large number of embosses of the protrusions and recesses, which is a quantitatively constant protrusion and recess pattern, can be formed.

### (Laminated glass)

The laminated glass according to the present invention includes a first lamination glass member, a second lamination glass member and the aforementioned interlayer film for laminated glass. In the laminated glass according to the present invention, the above-mentioned interlayer film for laminated glass is arranged between the first lamination glass member and the second lamination glass member.

Fig. 3 is a sectional view schematically showing an example of laminated glass prepared with the interlayer film for laminated glass shown in Fig. 1.

The laminated glass 31 shown in Fig. 3 is provided with a first lamination glass member 21, a second lamination glass member 22 and an interlayer film 11. The interlayer film 11 is arranged between the first lamination glass member 21 and the second lamination glass member 22 to be sandwiched therebetween.

The first lamination glass member 21 is layered on a first surface 11a of the interlayer film 11. The second lamination glass member 22 is layered on a second surface 11b opposite to the first surface 11a of the interlayer film 11. The first lamination glass member 21 is layered on an outer surface 2a of the second layer 2. The second lamination glass member 22 is layered on an outer surface 3a of a third layer 3.

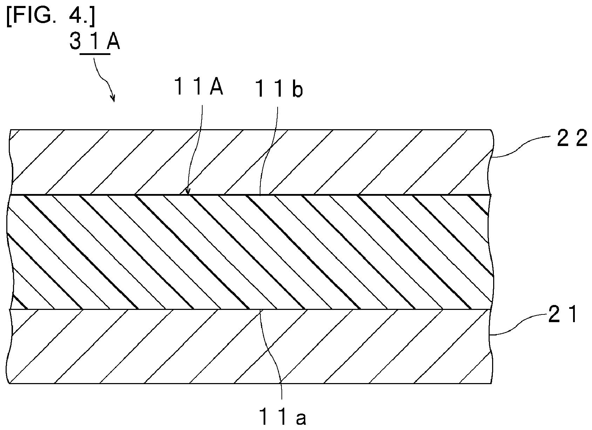

Fig. 4 is a sectional view schematically showing an example of laminated glass prepared with the interlayer film for laminated glass shown in Fig. 2.

The laminated glass 31A shown in Fig. 4 is provided with a first lamination glass member 21, a second lamination glass member 22 and an interlayer film 11A. The interlayer film 11A is arranged between the first lamination glass member 21 and the second lamination glass member 22 to be sandwiched therebetween.

The first lamination glass member 21 is layered on a first surface 11a of the interlayer film 11A. The second lamination glass member 22 is layered on a second surface 11b opposite to the first surface 11a of the interlayer film 11A.

As described above, the laminated glass according to the present invention includes a first lamination glass member, a second lamination glass member, and an interlayer film, and the interlayer film is the interlayer film for laminated glass according to the present invention. In the laminated glass according to the present invention, the above-mentioned interlayer film is arranged between the first lamination glass member and the second lamination glass member.

It is preferred that the first lamination glass member be the first glass plate. It is preferred that the second lamination glass member be the second glass plate.

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET film, and the laminated glass be provided with a glass plate as at least one among the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thicknesses of each of the first lamination glass member and the second lamination glass member is preferably 1 mm or more, and is preferably 5 mm or less, and more preferably 3 mm or less. Moreover, when the lamination glass member is a glass plate, the thickness of the glass plate is preferably 0.5 mm or more, more preferably 0.7 mm or more, preferably 5 mm or less and more preferably 3 mm or less. When the lamination glass member is a PET film, the thickness of the PET film is preferably 0.03 mm or more and is preferably 0.5 mm or less.

The method for producing the laminated glass is not particularly limited. For example, the interlayer film is sandwiched between the first lamination glass member and the second lamination glass member, and then, passed through pressure rolls or subjected to decompression suction in a rubber bag, so that the air remaining between the first and the second lamination glass members and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained. At the time of producing the laminated glass, layers in the interlayer film may be layered.

Each of the interlayer film and the laminated glass can be used for automobiles, railway vehicles, aircraft, ships, buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

Hereinafter, the present invention will be described in more detail with reference to examples and comparative examples. The present invention is not limited only to these examples.

The following materials were prepared.

With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited. When the acetal is acetoacetal or the like, the acetalization degree is calculated by measuring the acetylation degree and the content of the hydroxyl group, and calculating a mole fraction from the obtained measurement results, and then subtracting the acetylation degree and the content of hydroxyl groups from 100% by mole.

### (Resin)

Polyvinyl acetal resin (1) (using n-butyl aldehyde, polymerization degree: 1700, content of hydroxyl group: 33.5% by mole, acetylation degree: 1% by mole, butyralization degree: 65.5% by mole)
Polyvinyl acetal resin (2) (using n-butyl aldehyde, polymerization degree: 3000, content of hydroxyl group: 24% by mole, acetylation degree: 12% by mole, butyralization degree: 64% by mole)
Polyvinyl acetate (polymerization degree: 2400)
Acrylic (PMMA) polymer (thermoplastic resin, (available from MITSUBISHI RAYON CO., LTD., MF001, Vicat softening temperature 89°C (JIS K7206), melt flow rate 14.0 g/10 min (JIS K7210, 230°C, 37.3N))

### (Cured product)

### (Meth)acrylic polymers (1) to (9), (11), (12), (A) and (B) :

A polymerizable composition having the blending composition shown in the following Tables 1 and 2 was sandwiched between two PET sheets having subjected to a mold release treatment on one side (available from Nippa Corporation, having a thickness of 50 µm) to form a polymerizable composition layer having a thickness of 100 µm. A spacer was arranged around the two PET sheets. The polymerizable composition layer was irradiated with ultraviolet rays at a dose of 3000 mJ/cm² with a high pressure mercury UV lamp to cure the polymerizable composition by reaction, and thus (meth)acrylic polymers (1) to (9), (11), (12), (A) and (B) were obtained.

### (Meth)acrylic polymer (10):

A polymerizable composition having the blending composition shown in the following Table 2 was sandwiched between two PET sheets having subjected to a mold release treatment on one side (available from Nippa Corporation, having a thickness of 50 µm) to form a polymerizable composition layer having a thickness of 810 µm. A spacer was arranged around the two PET sheets. The polymerizable composition layer was irradiated with ultraviolet rays at a dose of 5000 mJ/cm² with a chemical lamp ("FL20SBL" available from TOSHIBA CORPORATION) to cure the polymerizable composition by reaction. Further, by heating at 100°C for 30 minutes after peeling off one of the PET sheets, the (meth)acrylic polymer (10) was obtained.

### (Plasticizer)

Triethylene glycol di-2-ethylhexanoate (3GO)

### (Metal salt M)

Mg mixture (50:50 (weight ratio) mixture of magnesium 2-ethylbutyrate and magnesium acetate)

### (Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

### (Oxidation inhibitor)

BHT (2,6-di-t-butyl-p-cresol)

### (Additive)

Additive (1) : 9,9-bis-[4-(2-hydroxyethoxy)phenyl]fluorene
Additive (2): YS resin SX100 (styrene oligomer, available from YASUHARA CHEMICAL CO., LTD.)

### (Example 1)

### Preparation of first layer:

The (meth)acrylic polymer (1) obtained in the above (layer containing a cured product, having a thickness of 100 µm) was prepared.

### Preparation of second layer and third layer:

The following ingredients were mixed, and kneaded sufficiently with a mixing roll to obtain a composition for forming a second layer and a third layer.

### Polyvinyl acetal resin (1) 100 parts by weight

### Plasticizer (3GO) 35 parts by weight

Metal salt M (Mg mixture) in such an amount that is 70 ppm in the obtained second layer and third layer
Ultraviolet ray screening agent (Tinuvin 326) in an amount of 0.2% by weight in the obtained second layer and third layer
Oxidation inhibitor (BHT) in an amount of 0.2% by weight in the obtained second layer and third layer

The composition for forming the second layer and the third layer was extruded with an extruder to obtain a second layer and the third layer (each having a thickness of 380 µm).

### Preparation of interlayer film:

A mold-release-treated PET sheet laminated on the first layer was peeled off, and the first layer and the second layer were bonded together by means of a roll laminator, and press-bonded to give a two-layer laminate. Subsequently, another mold-release-treated PET sheet laminated on the first layer was peeled off, and the first layer and the third layer were press-bonded in the same manner to obtain an interlayer film having a structure of second layer/first layer/third layer.

### Preparation of laminated glass for evaluation of sound insulating property (measurement of primary loss factor):

The obtained interlayer film was cut into a size of 25 mm wide and 300 mm long. As the first lamination glass member, and the second lamination glass member, two glass plates (clear float glass, 25 mm wide, 300 mm long and 2 mm thick) were prepared. The interlayer film was sandwiched between the two glass plates to obtain a laminate. The laminate was put into a rubber bag and the inside thereof was degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a sheet of laminated glass.

### Preparation of laminated glass for evaluation of haze:

The obtained interlayer film was cut into a size of 100 mm wide and 100 mm long. As the first lamination glass member, and the second lamination glass member, two glass plates (clear float glass, 100 mm wide, 100 mm long and 2 mm thick) were prepared. The interlayer film was sandwiched between the two glass plates to obtain a laminate. The laminate was put into a rubber bag and the inside thereof was degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a sheet of laminated glass.

### (Examples 2 to 9)

An interlayer film was obtained in the same manner as that in Example 1 except that the kinds and the amounts of the ingredients were set to those shown in the following Tables 3 and 4. In the second layer and the third layer, Metal salt M, an ultraviolet ray screening agent, and an oxidation inhibitor were blended in the same kinds and amounts as those in Example 1 (omitted in Tables 3 and 4).

Laminated glass was obtained in the same manner as that in Example 1 except that the obtained interlayer film was used.

### (Example 10)

As an interlayer film, the (meth)acrylic polymer (10) obtained in the above (layer containing a cured product, having a thickness of 810 µm) was prepared.

Laminated glass was obtained in the same manner as that in Example 1 except that the obtained interlayer film was used.

### (Examples 11 to 14)

### Preparation of first layer:

The ingredients shown in Table 4 were mixed, and kneaded sufficiently with a mixing roll to obtain a composition for forming a first layer, and then the composition was press-molded to have a thickness of 100 µm to obtain a layer containing a cured product of a (meth)acrylic polymer (11) or a cured product of a (meth)acrylic polymer (12) .

### Preparation of second layer and third layer:

The ingredients shown in Table 4 were mixed, and kneaded sufficiently with a mixing roll to obtain a composition for forming a second layer and a third layer.

### Preparation of interlayer film:

An interlayer film was obtained in the same manner as that in Example 1 except that the kinds and the amounts of the ingredients were set to those shown in the following Table 4. In the second layer and the third layer, Metal salt M, an ultraviolet ray screening agent, and an oxidation inhibitor were blended in the same kinds and amounts as that in Example 1 (omitted in Table 4).

Laminated glass was obtained in the same manner as that in Example 1 except that the obtained interlayer film was used.

### (Comparative Example 1)

One hundred parts by weight of a polyvinyl acetal resin (2), 75 parts by weight of a plasticizer (3GO), an ultraviolet ray screening agent (Tinuvin 326) in such an amount that is to be 0.2% by weight in the obtained interlayer film, and an oxidation inhibitor (BHT) in such an amount that is to be 0.2% by weight in the obtained interlayer film were mixed sufficiently with a mixing roll to obtain a composition for forming a first layer.

A composition for forming a second layer and a third layer the same as that in Example 1 was prepared.

By coextruding the obtained composition for forming a first layer and the obtained composition for forming a second layer and a third layer using a coextruder, an interlayer film having a structure of the second layer/the first layer/the third layer (thickness of first layer: 100 µm, the second layer and the third layer each having a thickness of 380 µm) was obtained.

Laminated glass was obtained in the same manner as that in Example 1 except that the obtained interlayer film was used.

### (Comparative Examples 2, 3)

An interlayer film was prepared in the same manner as that in Comparative Example 1 except that the kinds and the amounts of the ingredients were set to those shown in the following Table 5, and the thickness was set as shown in the following Table 5. In the second layer and the third layer, Metal salt M, an ultraviolet ray screening agent, and an oxidation inhibitor were blended in the same kinds and amounts as those in Comparative Example 1 (omitted in Table 5) .

Laminated glass was obtained in the same manner as that in Example 1 except that the obtained interlayer film was used.

### (Comparative Example 4)

The following ingredients were mixed, and kneaded sufficiently with a mixing roll to obtain a composition for forming an interlayer film.

### Polyvinyl acetal resin (2) 100 parts by weight

### Plasticizer (3GO) 75 parts by weight

An amount that is to be 70 ppm in the obtained interlayer film of Metal salt M (Mg mixture)
An amount that is to be 0.2% by weight in the obtained interlayer film of an ultraviolet ray screening agent (Tinuvin 326)
An amount that is to be 0.2% by weight in the obtained interlayer film of an oxidation inhibitor (BHT)
Additive (additive (1): 9,9-bis[4-(2-hydroxyethoxy)phenyl]fluorene) 75 parts by weight

The composition for forming an interlayer film was extruded with an extruder to obtain an interlayer film (810 µm thick).

Laminated glass was obtained in the same manner as that in Example 1 except that the obtained interlayer film was used.

### (Comparative Example 5)

Acrylic (PMMA) polymer was prepared as a composition for forming a first layer.

A composition for forming a second layer and a third layer the same as that in Example 1 was prepared.

By coextruding the obtained composition for forming a first layer and the obtained composition for forming a second layer and a third layer using a coextruder, an interlayer film having a structure of the second layer/the first layer/the third layer (thickness of first layer: 100 µm, the second layer and the third layer each having a thickness of 380 µm) was obtained.

Laminated glass was obtained in the same manner as that in Example 1 except that the obtained interlayer film was used.

### (Comparative Examples 6, 7)

An interlayer film was obtained in the same manner as that in Example 1 except that the kinds and the amounts of the ingredients were set to those shown in the following Table 5. In the second layer and the third layer, Metal salt M, an ultraviolet ray screening agent, and an oxidation inhibitor were blended in the same kinds and amounts as those in Example 1 (omitted in Table 5).

Laminated glass was obtained in the same manner as that in Example 1 except that the obtained interlayer film was used.

### (Evaluation)

### (1) Measurement of dynamic viscoelasticity

For the obtained interlayer film having a structure of only the first layer, and the obtained interlayer film having a structure of the second layer/the first layer/the third layer, dynamic viscoelasticity measurement was conducted. The following items were evaluated by measuring dynamic viscoelasticity in the condition of raising the temperature from -50°C to 200°C at a temperature rising speed of 3°C/ min. in a shearing mode, and in the condition of a frequency of 1 Hz and a strain of 1%, using a dynamic viscoelasticity analyzer (DVA-200 available from IT Keisoku Seigyo Co. Ltd.).

Peak temperature of tanδ of first layer
Tanδ (1) at peak temperature of tanδ of first layer
Peak temperature of tanδ of second and third layers
Tanδ (2) at peak temperature of tanδ of second and third layers
Ratio (tanδ (1)/tanδ (2))
Storage modulus G' of first layer at 100°C of first layer

### (2) Primary loss factor (sound insulating property)

The obtained laminated glass was excited with a vibration generator for damping test ("Vibrator G21-005D" available from Shinken. Co., Ltd.). The resultant vibration characteristic was amplified with a mechanical impedance measuring device ("XG-81" available from RION Co., Ltd.), and the vibration spectrum was analyzed with an FFT spectrum analyzer ("FFT analyzer SA-01A2" available from RION Co., Ltd.).

From the primary loss factor, sound insulating property was judged according to the following criteria.

### [Criteria for judgment in sound insulating property]

○○: primary loss factor is 0.35 or more
○: primary loss factor is 0.2 or more and less than 0.35
Δ: primary loss factor is 0.1 or more and less than 0.2
×: primary loss factor is less than 0.1

### (3) Haze

Haze of a laminated glass directly after preparation was measured. After storing the laminated glass directly after preparation, at 23°C and 50%RH for 4 weeks, the haze of the laminated glass after storage was measured.

### [Criteria for judgment in haze of laminated glass directly after preparation]

○: haze is 2.5% or less
×: haze is more than 2.5%

### [Criteria for judgment in haze of laminated glass after storage]

○: ratio of haze after storage to haze before storage is 0.99 or more and 1.01 or less
Δ: ratio of haze after storage to haze before storage is 0.5 or more and less than 0.99, or more than 1.01 and 1.5 or less
×: ratio of haze after storage to haze before storage is less than 0.5 or more than 1.5

The details and the results are shown in the following Tables 1 to 5. In the following Tables 3 to 5, description of Metal salt M, the ultraviolet ray screening agent, and the oxidation inhibitor was omitted. In Tables 3 to 5, "E+03" means "× 10³", "E+04" means "× 10⁴", and "E+05" means "× 10⁵".

**[Table 1]**

| | | | Acrylic polymer (1) | Acrylic polymer (2) | Acrylic polymer (3) | Acrylic polymer (4) | Acrylic polymer (5) | Acrylic polymer (6) | Acrylic polymer (7) |
|---|---|---|---|---|---|---|---|---|---|
| Ingredient | EA | parts by weight | | | | 18 | 38 | | 28 |
| | HEA | parts by weight | | | | 15 | | | |
| | BzA | parts by weight | | | | 23 | 34 | | 34 |
| | BA | parts by weight | | | | 44 | | 55 | |
| | THF-A | parts by weight | 100 | 90 | 95 | | | 20 | |
| | CHA | parts by weight | | | 5 | | | | |
| | HPA | parts by weight | | 10 | | | 28 | 15 | 38 |
| | CTFA(#200) | parts by weight | | | | | | | |
| | 2-EHA | parts by weight | | | | | | 10 | |
| | ISTA | parts by weight | | | | | | | |
| | 4HBA | parts by weight | | | | | | | |
| | IBOA | parts by weight | | | | | | | |
| | IRGACURE 184 | parts by weight | 0.2 | 0.2 | 0.2 | 0.2 | 0.2 | 0.2 | 0.2 |

**[Table 2]**

| | | | Acrylic polymer (8) | Acrylic polymer (9) | Acrylic polymer (10) | Acrylic polymer (11) | Acrylic polymer (12) | Acrylic polymer (A) | Acrylic polymer (B) |
|---|---|---|---|---|---|---|---|---|---|
| Ingredient | EA | parts by weight | 25.5 | | | | | 4 | |
| | HEA | parts by weight | | | | | | | 13 |
| | BzA | parts by weight | 32.5 | 34 | 34 | | | 38 | |
| | BA | parts by weight | | 15 | 15 | | | | |
| | THF-A | parts by weight | | 26 | 26 | | | | |
| | CHA | parts by weight | | | | | | | |
| | HPA | parts by weight | 28 | | | | | 20 | |
| | CTFA(#200) | parts by weight | 14 | 10 | 10 | 40 | 35 | 38 | |
| | 2-EHA | parts by weight | | | | | | | 47 |
| | ISTA | parts by weight | | | | | | | 30.9 |
| | 4HBA | parts by weight | | | | | 5 | | 9 |
| | IBOA | parts by weight | | | | 60 | 60 | | |
| | IRGACURE 184 | parts by weight | 0.2 | 0.2 | 0.2 | 0.2 | 0.2 | 0.2 | 0.1 |

The details of the ingredients in Tables 1 and 2 are as follows.
EA: ethyl acrylate (available from NIPPON SHOKUBAI CO., LTD.)
HEA: 2-hydroxyethyl acrylate (available from OSAKA ORGANIC CHEMICAL INDUSTRY LTD.)
BzA: benzyl acrylate (available from OSAKA ORGANIC CHEMICAL INDUSTRY LTD., VISCOAT #160)
BA: n-butyl acrylate (available from NIPPON SHOKUBAI CO., LTD.)
THF-A: tetrahydrofurfuryl acrylate (available from OSAKA ORGANIC CHEMICAL INDUSTRY LTD., VISCOAT #150)
CHA: cyclohexyl acrylate (available from OSAKA ORGANIC CHEMICAL INDUSTRY LTD., VISCOAT #155)
HPA: hydroxypropyl acrylate (available from OSAKA ORGANIC CHEMICAL INDUSTRY LTD.)
CTFA (#200): cyclic trimethylolpropane formal acrylate (available from OSAKA ORGANIC CHEMICAL INDUSTRY LTD., VISCOAT #200)
2-EHA: 2-ethylhexyl acrylate (available from NIPPON SHOKUBAI CO., LTD.)
ISTA: isostearyl acrylate (available from OSAKA ORGANIC CHEMICAL INDUSTRY LTD.)
4HBA: 4-hydroxybutyl acrylate (available from OSAKA ORGANIC CHEMICAL INDUSTRY LTD.)
IBOA: isobornyl acrylate (available from NIPPON SHOKUBAI CO., LTD.)
IRGACURE 184: 2,2-dimethoxy-1,2-diphenylethan-1-one (available from BASF)

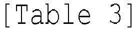

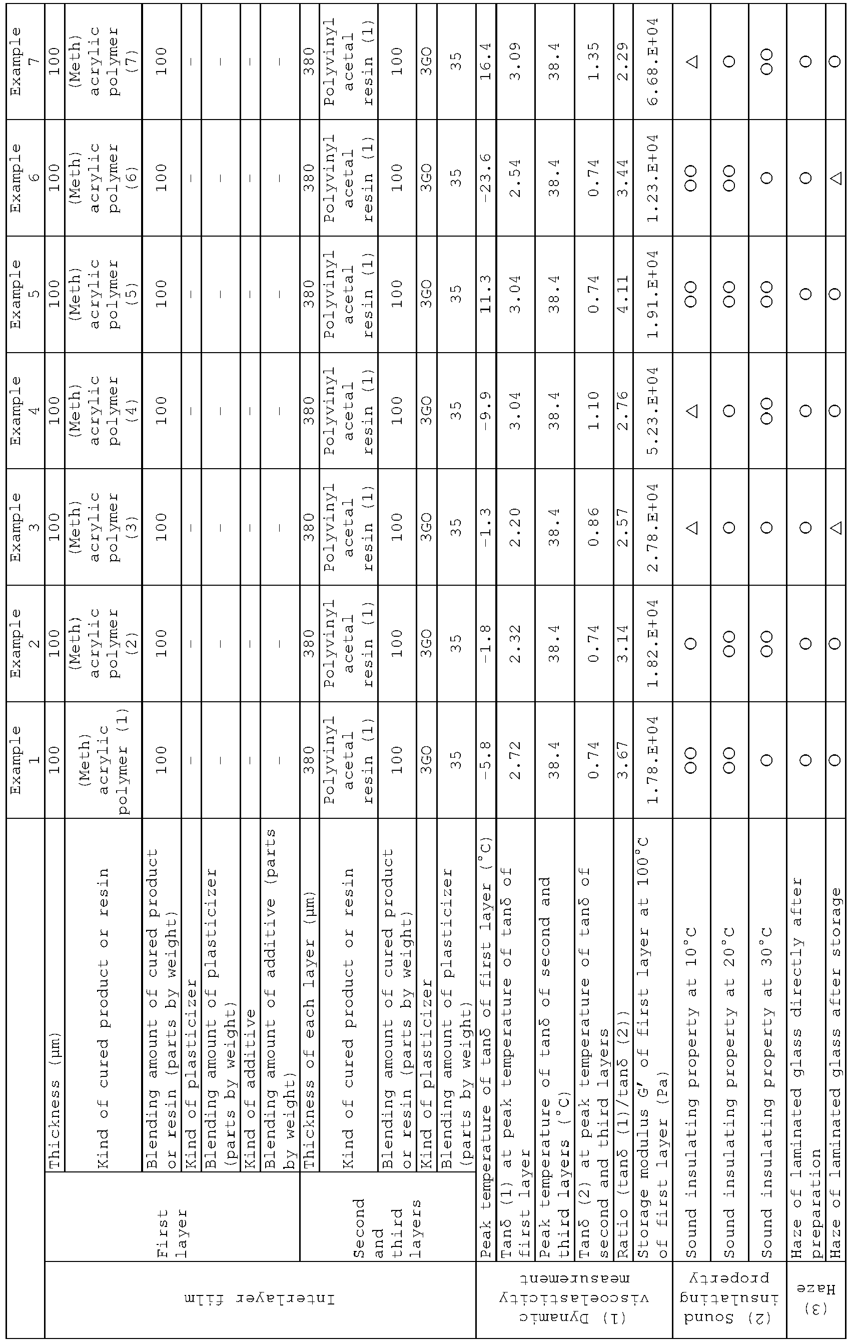

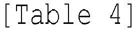

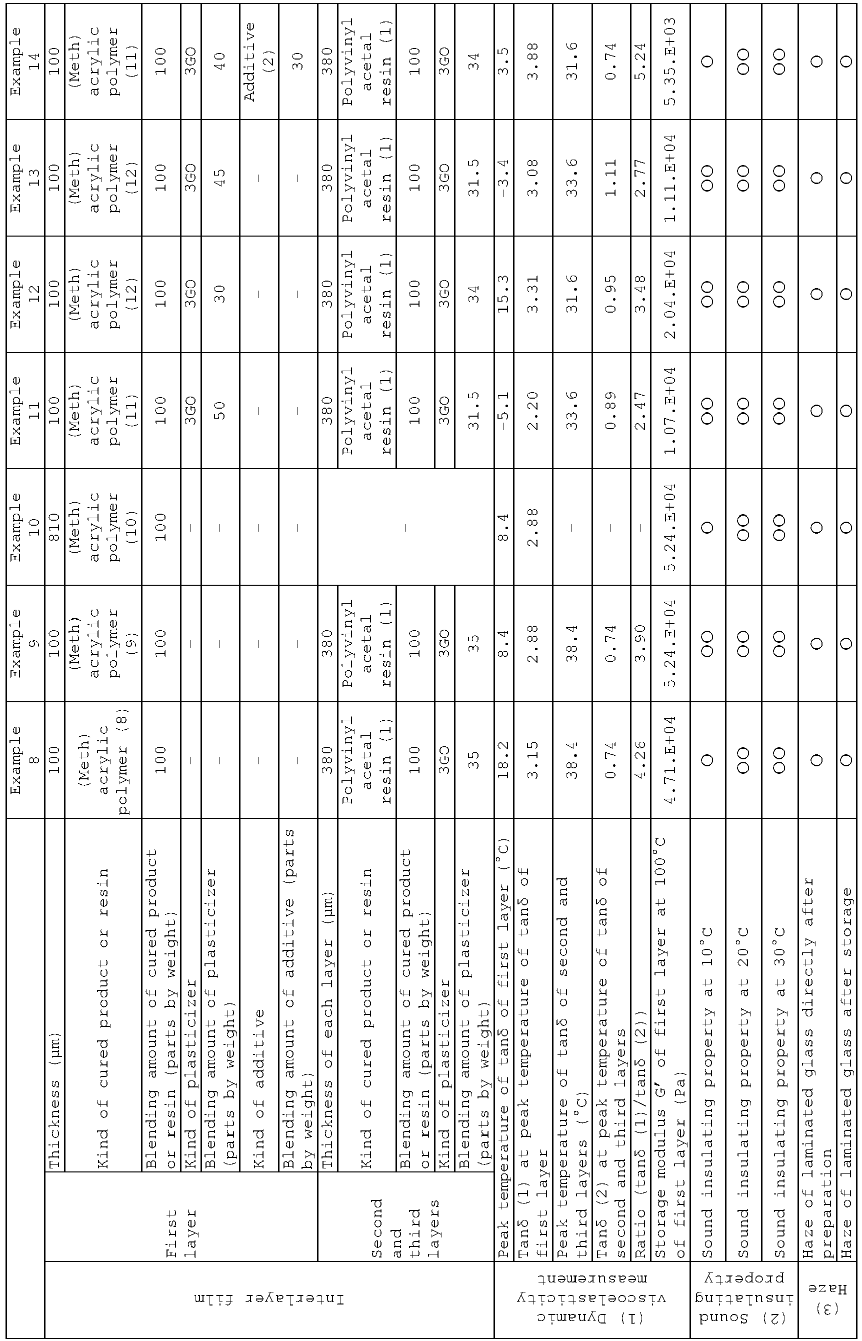

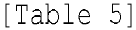

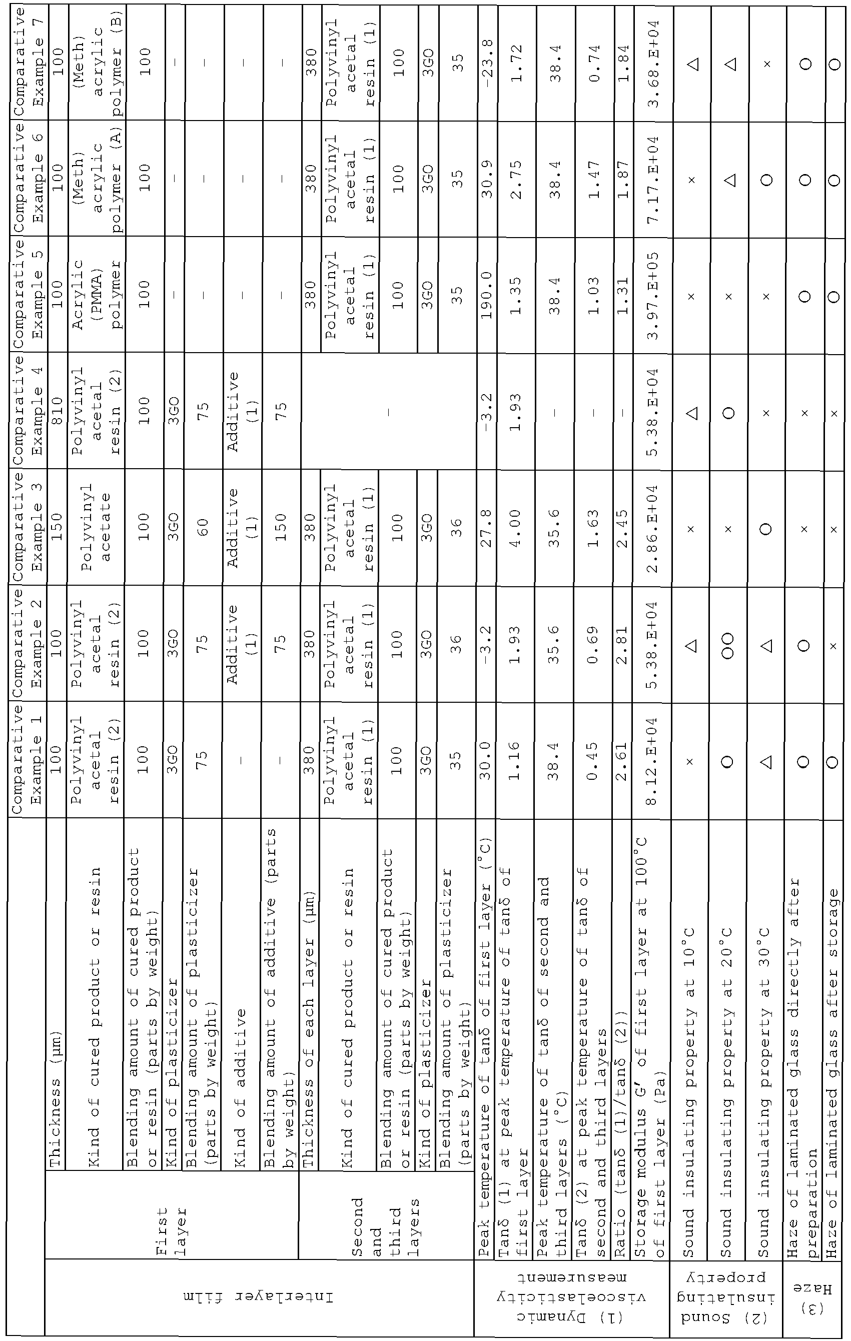

### EXPLANATION OF SYMBOLS

- 1:: First layer
- 1a:: First surface
- 1b:: Second surface
- 2:: Second layer
- 2a:: Outer surface
- 3:: Third layer
- 3a:: Outer surface
- 11:: Interlayer film
- 11A:: Interlayer film (first layer)
- 11a:: First surface
- 11b:: Second surface
- 21:: First lamination glass member
- 22:: Second lamination glass member
- 31:: Laminated glass
- 31A:: Laminated glass

## Claims

1. An interlayer film for laminated glass having a one-layer structure or a two or more-layer structure,
the interlayer film comprising a layer containing a cured product,
the cured product being a cured product of a photocurable compound or a moisture-curable compound,
the layer containing a cured product having a peak temperature of tanδ of -50°C or more and 30°C or less and having tanδ at the peak temperature of tanδ of 2.0 or more in viscoelasticity measurement at a frequency of 1 Hz and in a shearing mode.

2. The interlayer film for laminated glass according to claim 1, wherein the cured product is a cured product of a photocurable compound.

3. An interlayer film for laminated glass having a one-layer structure or a two or more-layer structure, the interlayer film comprising a layer containing a cured product,
the cured product being a cured product of a curable compound having a (meth)acryloyl group,
the layer containing a cured product having a peak temperature of tanδ of -50°C or more and 30°C or less and having tanδ at the peak temperature of tanδ of 2 or more in viscoelasticity measurement at a frequency of 1 Hz and in a shearing mode.

4. The interlayer film for laminated glass according to any one of claims 1 to 3, wherein the layer containing a cured product has a storage modulus G' at 100°C of 5.0 × 10³ Pa or more.

5. The interlayer film for laminated glass according to any one of claims 1 to 4, wherein in viscoelasticity measurement at a frequency of 1 Hz and in a shearing mode for the layer containing a cured product, a peak temperature of tanδ is -30°C or more and 20°C or less.

6. The interlayer film for laminated glass according to any one of claims 1 to 5, wherein
the interlayer film has a two or more-layer structure, and
the interlayer film includes a layer containing a resin that is different from the cured product.

7. The interlayer film for laminated glass according to any one of claims 1 to 5, wherein
the interlayer film for laminated glass has a two or more-layer structure,
the interlayer film includes a layer containing a resin that is different from the cured product, and
in viscoelasticity measurement at a frequency of 1 Hz and in a shearing mode for the interlayer film, a peak temperature of tanδ of the layer containing a resin that is different from the cured product is -100°C or more and 100°C or less, and a ratio of tanδ at a peak temperature of tanδ of the layer containing a cured product, to tanδ at a peak temperature of tanδ of the layer containing a resin that is different from the cured product in viscoelasticity measurement at a frequency of 1 Hz and in a shearing mode for the interlayer film is 2.0 or more and 10.0 or less.

8. A laminated glass comprising:
a first lamination glass member;
a second lamination glass member; and
the interlayer film for laminated glass according to any one of claims 1 to 7,
the interlayer film for laminated glass being arranged between the first lamination glass member and the second lamination glass member.
